# EUROPEAN PATENT SPECIFICATION

(11) **EP 2 191 396 B1**
(45) Date of publication and mention of the grant of the patent: **29.05.2013**
(21) Application number: 08786964.0
(22) Date of filing: 06.08.2008
(51) Int. Cl.: G06F 17/22

(54) **AN APPARATUS FOR PREPARING A DISPLAY DOCUMENT FOR ANALYSIS**
VORRICHTUNG ZUR VORBEREITUNG EINES ANZEIGEDOKUMENTS FÜR ANALYSE
DISPOSITIF POUR PRÉPARER UN DOCUMENT D'AFFICHAGE POUR ANALYSE

(30) Priority: 03.09.2007 GB 0717067
(43) Date of publication of application: 02.06.2010
(73) Proprietor: International Business Machines Corporation, Armonk, NY 10504 (US)
(72) Inventor: LEE, Adrian, Stockbridge, Hampshire SO20 8JQ (GB)
(74) Representative: Shaw, Anita
(86) International application number: PCT/EP2008/060359
(87) International publication number: WO 2009/030577

(56) References cited:
- WO-A2-01/82126
- SHAIKLI N.: "Re: yudit + bidi" ARABEYES.ORG, [Online] 3 June 2002 (2002-06-03), XP002519982 Retrieved from the Internet: URL:http://lists.arabeyes.org/archives/dev eloper/2002/June/msg00002.html> [retrieved on 2009-03-18]
- GIDALI I.: "Complex-Text Languages - An Overview" OPEN GROUP, [Online] 5 September 2005 (2005-09-05), XP002519983 Retrieved from the Internet: URL:http://web.archive.org/web/20050905235 220/http://www.opengroup.org/onlinepubs/96 38399/overview.htm> [retrieved on 2009-03-18]
- ATKIN S ET AL: "Implementations of Bidirectional Reordering Algorithms" TECHNICAL REPORT - FLORIDA INSTITUTE OF TECHNOLOGY - DEPARTEMENT OF COMPUTER SCIENCES, [Online] 4 October 2000 (2000-10-04), XP002519984 Retrieved from the Internet: URL:https://www.cs.fit.edu/Projects/tech_r eports/tr2000.html> [retrieved on 2009-03-18]
- ISHIDA R.: "What you need to know about the bidi algorithm and inline markup" W3C - WORD WIDE WEB CONSORTIUM, [Online] 3 December 2006 (2006-12-03), XP002519985 Retrieved from the Internet: URL:http://www.w3.org/International/articl es/inline-bidi-markup/> [retrieved on 2009-03-18]
- ISHIDA R: "Internationalization Best Practices: Handling Right-to-left Scripts in XHTML and HTML Content" W3C - WORD WIDE WEB CONSORTIUM, [Online] 6 June 2007 (2007-06-06), XP002519986 Retrieved from the Internet: URL:http://www.w3.org/TR/i18n-html-tech-bi di/> [retrieved on 2009-03-18]

## Description

### FIELD OF THE INVENTION

The present invention relates to an apparatus for preparing a display document for analysis.

### BACKGROUND OF THE INVENTION

Text associated with a document (e.g. a PDF file) is extracted from the document prior to text analysis being performed.

It is desirable for the extracted text to be in logical (i.e. reading) order prior to text analysis being performed.

Some document formats, particularly those that are intended for display purposes (e.g. PDF), display text in left-to-right (LtR) order regardless of whether a language associated with the text has an associated LtR logical order (e.g. English) or right-to-left (RtL) logical order (e.g. Arabic).

If text is associated with an RtL logical order and an associated document is displayed in an LtR order, current text extraction tools extract the text in the displayed order (e.g. LtR order). Thus, the extracted text is not suitable for text analysis because the text is in a (reversed) LtR order.

WIPO (PCT) published application no. WO 01/82126 relates to user interfaces and more particularly relates to display of text from legacy applications written for unidirectional text in bidirectional text environments. It discloses a method and apparatus for support of bidirectional text in legacy applications. In general, the method involves first flipping all of the text, and thereby putting most of the text into its proper position and orientation. The method then involves finding any foreign (left-to-right) text within the flipped text, and flipping it back.

### DISCLOSURE OF THE INVENTION

According to a first aspect, there is provided an apparatus for preparing a display document for analysis comprising: an extractor for extracting character data from the display document; an order identifier for determining a first order associated with processing of the character data; and a language identifier for identifying at least one language associated with the character data in the document. The order identifier is operable to identify a second order associated with a logical order of the character. At least one of: the language identifier and the order identifier is operable to generate a confidence value associated with at least one of: the identified language and the determined second order respectively. The apparatus comprises means for comparing the confidence value against a confidence threshold. The order identifier is operable to use the identified language for determining a rule against which to compare the character data in the document in order to determine the second order. The order identifier is operable to determine whether the first order is different from the second order. A reverse component, responsive to the order identifier determining that the first order is different from the second order, is operable for reversing the character data.

According to a second aspect, there is provided a computer implemented method for preparing a display document for analysis comprising the steps of: extracting character data from the display document; determining a first order associated with processing of the character data; identifying at least one language associated with the character data in the document; identifying a second order associated with a logical order of the character data; generating a confidence value associated with at least one of: the identified language and the determined second order respectively; comparing the confidence value against a confidence threshold; using the identified language for determining a rule against which to compare the character data in the document in order to determine the second order; using the comparison to determine whether the first order is different from the second order; and reversing, in response to the determination that the first order is different from the second order, the character data.

According to a third aspect, there is provided a computer program comprising program code means adapted to perform all the steps of the method above when said program is run on a computer.

### BRIEF DESCRIPTION OF THE DRAWINGS

The present invention will now be described, by way of example only, with reference to preferred embodiments thereof, as illustrated in the following drawings:
Figure 1 is a block diagram of an apparatus of the preferred embodiment;
Figure 2 is a flow chart showing the operational steps involved in a process for preparing a display document for analysis;
Figure 3 is a flow chart showing the operational steps involved in a process for determining at least one language;
Figure 4 is a flow chart showing the operational steps involved in a process for determining whether a logical order is reversed in extracted text; and
Figure 5 is a flow chart showing the operational steps involved in a process for, responsive to a determination that a logical order is reversed in the extracted text, correcting text.

### DETAILED DESCRIPTION OF THE PREFERRED EMBODIMENT

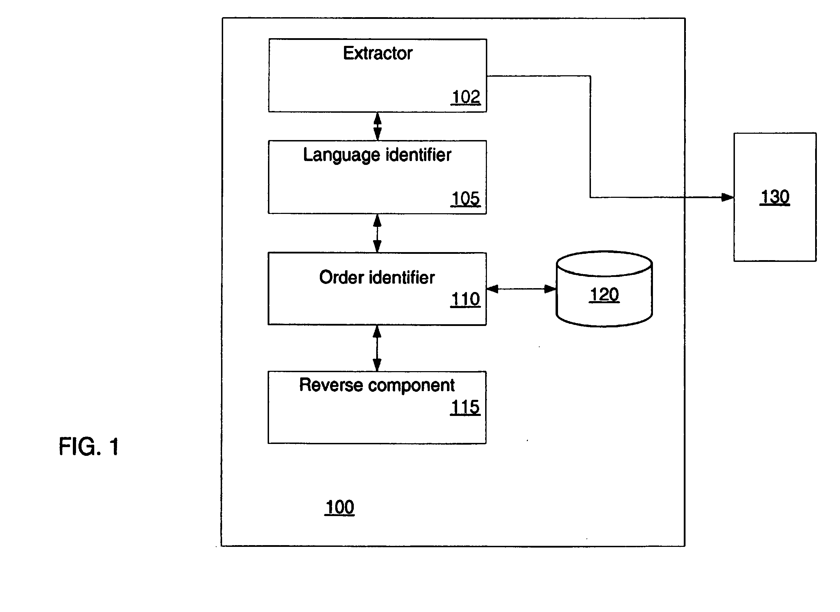

An apparatus (100) of the preferred embodiment is depicted in figure 1.

In a pre-processing step, preferably, an extractor (102) extracts text associated with the document (e.g. wherein the document is stored in a PDF file).

In a first example herein, the extracted text is stored.

The apparatus (100) comprises a language identifier (105) operable to access one or more documents (130).

In the first example herein, a processing order is from a start to an end of the text (effectively, an LtR order).

Preferably, the processing order is sent to an order identifier (110).

The order identifier (110) is operable to access a first storage component (120) and a reverse component (115).

A process of the preferred embodiment will now be described with reference to the figures.

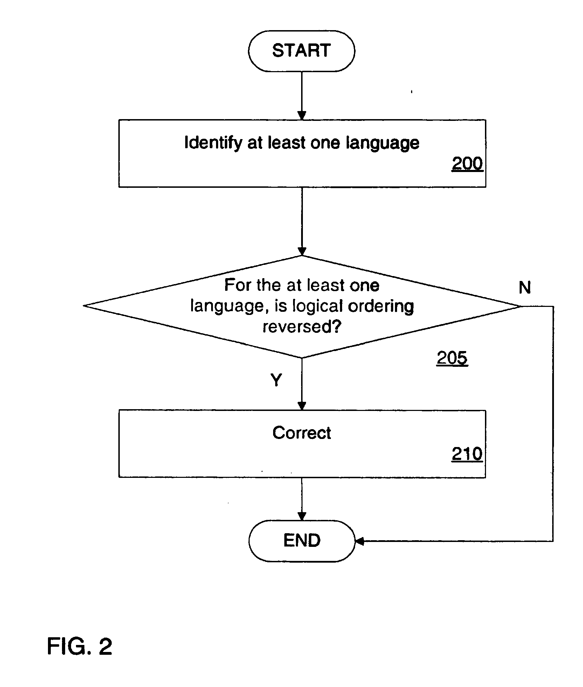

With reference to figure 2, at step 200, the extracted text is analyzed to determine at least one language.

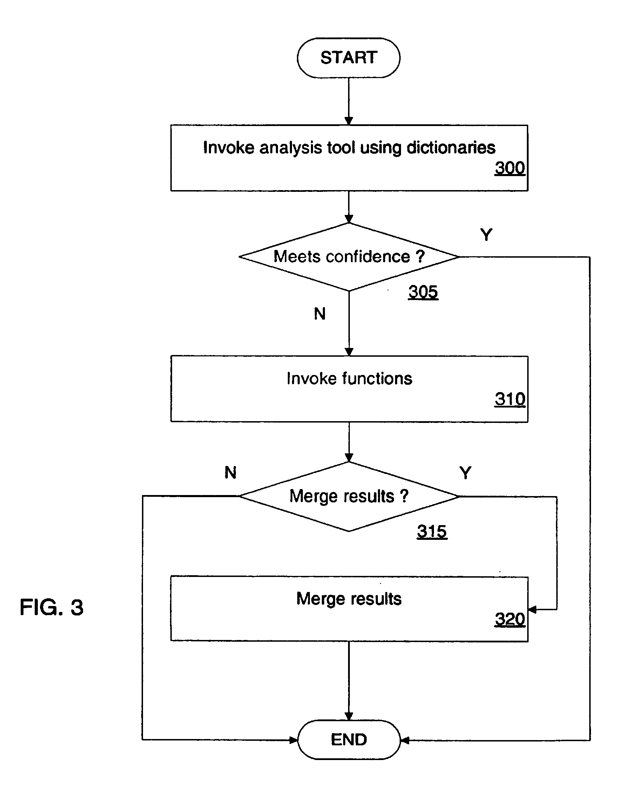

Step 200 comprises a number of steps depicted in figure 3. At step 300, preferably, the language identifier (105) invokes an analysis tool (e.g. LanguageWare (LanguageWare is a registered trademark of International Business Machines Corporation)).

In one example, the analysis tool analyses the extracted text (in processing order e.g. LtR order) associated with a document and compares the extracted text against a set of dictionaries, wherein a dictionary is associated with a language. In response to the comparison, the analysis tool determines a result indicating at least one language associated with the extracted text. Preferably, if the analysis tool is not able to determine a language, the extracted text is reversed and input to the analysis tool. In response, typically, the analysis tool is more likely to determine a language (e.g. Arabic).

Preferably, the analysis tool provides the language identifier (105) with a confidence value associated with the result (e.g. using statistical data).

At step 305, the language identifier (105) determines whether the provided confidence value meets a pre-configurable confidence threshold. If the provided confidence value meets the pre-configurable confidence threshold, the result is stored.

The language identifier (105) passes the result to the order identifier (110).

The process of figure 3 ends and step 205 of figure 2 is executed.

If the provided confidence value does not meet the pre-configurable confidence threshold, preferably, the language identifier (105) invokes (step 310) one or more functions.

A character can be stored using one of several encoding schemes, for example, ISO 8859 or UTF-16 (Unicode). Using an encoding scheme, each character of each language represented has a unique "code", that is, a unique "number" assigned to it within that encoding scheme.

An encoding scheme can have a language explicitly associated with it, for example, ISO 8859-6 is associated with Arabic. Other encoding schemes (e.g. Unicode) can support multiple languages.

In one example, the language identifier (105) invokes (step 310) a first function which obtains a set of character encodings associated with the extracted text. The first function compares the set of character encodings against a knowledge base which maps a character encoding with a language. In response to the comparison, the first function determines a result indicating at least one language associated with the extracted text.

Preferably, the first function provides the language identifier (105) with a confidence value associated with the result.

Preferably, if the first function determines that the determined language is one of at least two languages, preferably, the language identifier (105) invokes (step 310) a second function.

In one example, the second function compares the set of character encodings against a knowledge base which maps a character encoding with a script. For example, two languages may have different scripts and thus, the second function can be used to determine which language of the at least two languages is associated with the extracted text. In response to the comparison, the second function determines a result indicating at least one language associated with the extracted text.

Preferably, the second function provides the language identifier (105) with a confidence value associated with the result.

In one example, results comprising one or more determined languages from the analysis tool and from the one or more functions are merged.

Optionally, at step 315, the language identifier (105) determines whether results comprising one or more determined languages from the analysis tool and from the one or more functions should be merged.

In one example, if each of the confidence values received from the analysis tool and one or more functions do not meet the pre-configurable confidence threshold, the language identifier (105) determines that the results should be merged.

In response to determining that the results should be merged, the language identifier (105) merges (step 320) the results.

The language identifier (105) passes the merged results to the order identifier (110).

The process of figure 3 ends and step 205 of figure 2 is executed.

In response to determining that the results should not be merged, the result determined by the one or more functions is stored.

The language identifier (105) passes the result to the order identifier (110).

The process of figure 3 ends and step 205 of figure 2 is executed.

In a first example, the result comprises: **English and Arabic.**

With reference to figure 2, at step 205, the order identifier (110) determines whether a logical order is reversed in the extracted text, that is, whether the logical order is reversed with respect to the processing order.

In one example, at least one of the analysis tool and the one or more functions may be able to determine whether a logical order is reversed in the extracted text. For example, if the extracted text having a logical order (e.g. RtL) that is reversed (e.g. LtR) is input to the analysis tool, the analysis tool will not be able to determine a language. However, if (e.g. a subset of) the extracted text is reversed and input to the analysis tool, the analysis tool is more likely to determine a language (e.g. Arabic).

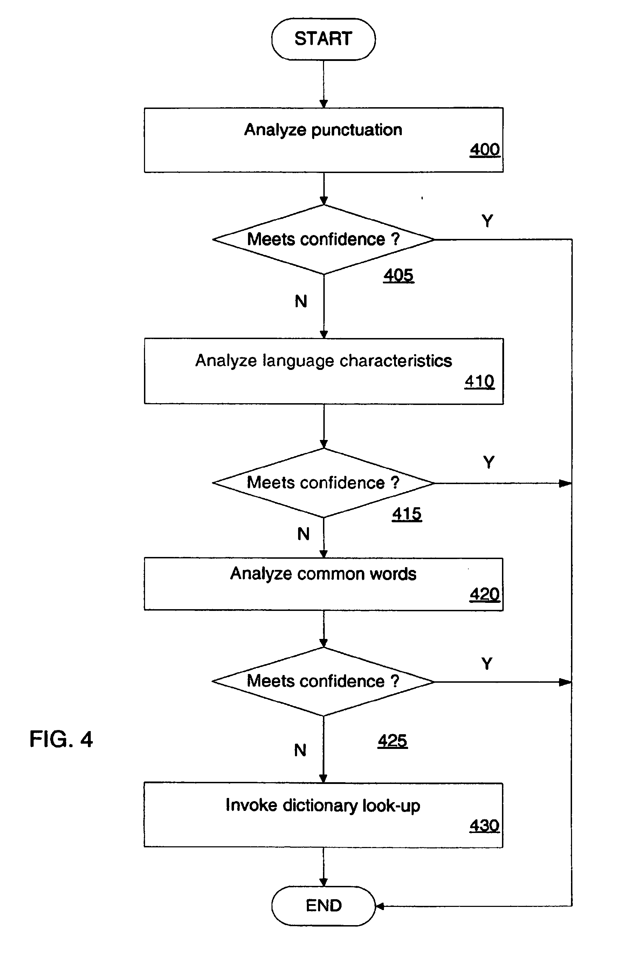

However, if a determination as to whether a logical order is reversed in the extracted text cannot be made, a process of figure 4 is preferably executed.

With reference to figure 4, at step 400, the order identifier (110) analyses punctuation associated with the extracted text.

For example, the extracted text comprises the following subset. It should be understood that the extracted text comprises text having LtR logical order (e.g. "cows drink water.") and text having RtL logical order (e.g. ".doof emos tae stac eht"). It should be understood that the text having RtL logical order represents Arabic text in the examples herein. It should be understood that capital letters have not been used in the example below:

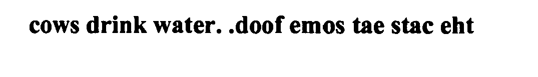

Firstly, the order identifier (110) processes the extracted text in LtR order. In response, the order identifier (110) identifies characters associated with punctuation (e.g. position dependent characters).

With reference to the above text, the order identifier (110) identifies a first full stop ("."). In response to identifying a punctuation character, the order identifier (110) identifies a character either side of the punctuation character. With reference to the above text, the order identifier (110) identifies an alphabetical character (e.g. "r") to the left hand side of the full stop and a space character to the right hand side of the full stop. Thus, the order identifier (110) identifies a set comprising the following types of characters in LtR order:

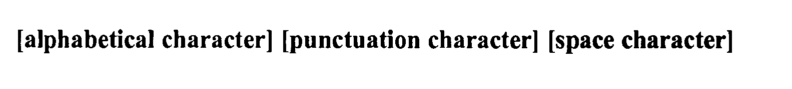

With reference to the above text, the order identifier (110) identifies a second full stop ("."), a space character to the left hand side of the full stop and an alphabetical character (e.g. "d") to the right hand side of the full stop. Thus, the order identifier (110) identifies a set comprising the following types of characters in LtR order:

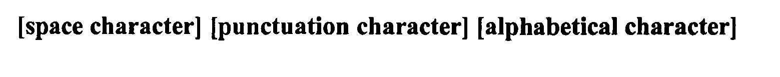

Preferably, the order identifier (110) compares the set against a first set of rules stored in the first storage component (120). Preferably, a rule maps data associated with punctuation character usage with a logical order and an indication as to whether the logical order is revered in the extracted text.

An example of a rule is shown below. The rule is associated with a format wherein a punctuation character typically occurs at the logical end of a word, regardless of whether text has an LtR logical order or an RtL logical order:

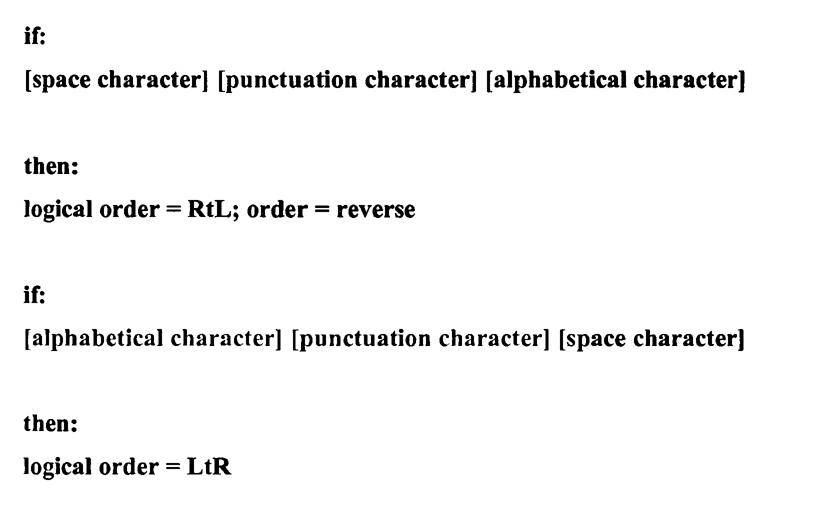

In response to comparison against the rule, the order identifier (110) generates a result indicating that the text comprises a logical order of LtR and RtL. The result also indicates that the RtL logical order is reversed in the extracted text.

Preferably, the order identifier (110) also provides in the result an indication of the number of occurrences of text having an LtR logical order and text having an RtL logical order. In the first example, the order identifier (110) indicates one occurrence of text having an LtR logical order (e.g. the first punctuation character) and one occurrence of text having an RtL logical order (e.g. the second punctuation character).

Preferably, the order identifier (110) determines an associated confidence value associated with the result and determines (step 405) whether the confidence value meets a pre-configurable confidence threshold. If the provided confidence value meets the pre-configurable confidence threshold, the result is stored.

The process of figure 4 ends.

If the logical order of at least a sub-set of the extracted text is reversed, the order identifier (110) passes the result to the reverse component (115) and step 210 of figure 2 is executed.

If the logical order of at least a sub-set of the extracted text is not reversed, the process of figure 2 ends.

Preferably, a rule can be associated with a language. Advantageously, the order identifier (110) can use the result(s) obtained following step 200 (i.e. a result indicating at least one determined language) in order to select a rule (e.g. a rule associated with English) against which to compare extracted text. Thus, advantageously, a rule associated with characteristics of a particular language can be selected (which can thus improve the accuracy of the result determined by the order identifier (110)).

In another example of analysis of position dependent characters, analysis of presentation data associated with a character can be used. For example, a character in some languages such as Arabic has, as well as a character encoding, an encoding associated with a presentation form.

This is because the character is displayed differently depending on how it occurs in a word (e.g. in the middle of a word ("medial"); at the beginning of a word ("initial"); at the end of a word ("final") or in isolation ("isolated")).

For example, the order identifier (110) processes the extracted text and determines presentation data associated with a first character. In an example, the presentation data comprises "initial". The order identifier (110) determines characters either side of the first character. In an example, a character to the left hand side is an alphabetical character and a character to the right hand side is a space character. The order identifier (110) compares the types of characters (e.g. **[alphabetical character] [initial] [space character])** found against a rule.

Preferably, a rule maps data associated with presentation data with a logical order and an indication as to whether the logical order is revered in the extracted text.

An example of a rule is shown below. The rule is associated with a format wherein an initial character typically has a space character to the left hand side and an alphabetical character to the right hand side, regardless of whether text has an LtR logical order or an RtL logical order:

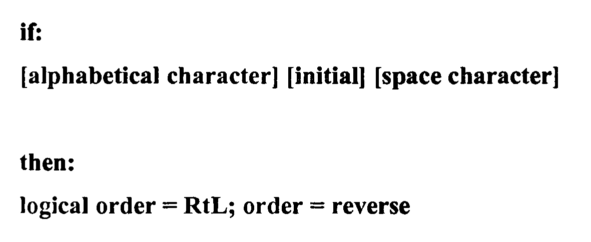

In response to a comparison based on the rule, the order identifier (110) generates a result indicating that the text comprises a logical order of RtL and that the RtL logical order is reversed in the extracted text.

Advantageously, such a mechanism exploits the fact that particular languages (e.g. Arabic) can have a character that can be presented differently depending on where the character occurs in a word.

If the provided confidence value does not meet the pre-configurable confidence threshold, the order identifier (110) analyses (step 420) commonly occurring words in the extracted text.

For example, the order identifier (110) accesses a set of commonly occurring words (e.g. preferably, words that are commonly occurring in multiple languages) stored in the first storage component (120).

Preferably, a commonly occurring word such as "the" is stored in LtR logical order (e.g. "the") and the reversed logical order (e.g. "eht"). Preferably, an identifier associated with a logical order is associated with the commonly occurring word. Preferably, an indication associated with whether a logical order is reversed in the extracted text is also associated with the commonly occurring word. An example is shown below:

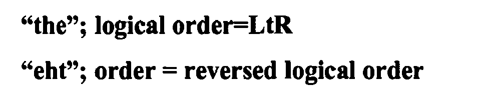

Preferably, a commonly occurring word is stored with a space character on either side of the boundary characters. For example, "the" is stored as " the ". This ensures that the order identifier (110) does not find occurrences of the commonly occurring word within another word. For example, the order identifier (110) will not find "the" within "other".

Preferably, a first word which when reversed is a different second word, is not used (e.g. "room" when reversed is "moor"). This is because the order identifier (110) will not be able to distinguish between an occurrence of the first word which has been reversed and an occurrence of the different second word. However, if such words are used, preferably, the order identifier (110) invokes a grammatical analysis such that the order identifier (110) is able to distinguish between an occurrence of the first word which has been reversed and an occurrence of the different second word.

The order identifier (110) processes the extracted text in LtR logical order and checks it for one or more commonly occurring words stored in LtR logical order and reversed logical order.

With reference to the above text, the order identifier (110) identifies "eht".

In response, the order identifier (110) uses the data stored with the occurrence of the commonly occurring word in order to determine a result indicating that a logical order is reversed in the extracted text.

Preferably, the order identifier (110) also provides in the result an indication of the number of occurrences of text having an LtR logical order and text having a reversed logical order.

In the first example, the order identifier (110) indicates one occurrence of text having a reversed logical order (e.g. the commonly occurring word "eht").

Preferably, the order identifier (110) determines an associated confidence value associated with the result and determines (step 425) whether the confidence value meets a pre-configurable confidence threshold. If the provided confidence value meets the pre-configurable confidence threshold, the result is stored.

The process of figure 4 ends.

If the logical order of at least a sub-set of the extracted text is reversed in the extracted text, the order identifier (110) passes the result to the reverse component (115) and step 210 of figure 2 is executed.

If the logical order of at least a sub-set of the extracted text is not reversed in the extracted text, the process of figure 2 ends.

If the provided confidence value does not meet the pre-configurable confidence threshold, the order identifier (110) invokes (step 430) a look-up of one or more dictionaries.

For example, the previous steps may not have produced results meeting the confidence threshold because the extracted text is associated with a particular domain (e.g. a patent specification; a computer technology-related document).

Preferably, a dictionary comprises a word stored in LtR logical order and reversed logical order, an identifier associated with a logical order and an indication associated with whether a logical order is reversed in the extracted text.

Alternatively, a word associated with an LtR logical order can be input to the dictionary and if the dictionary is not able to determine a result, the word is reversed and input to the dictionary. In response, typically, the dictionary is more likely to determine a result. Advantageously, this results in the dictionary having to store less data.

Preferably, in response to step 430, the order identifier (110) determines a result indicating whether there is text having an LtR logical order, text having an RtL logical order, whether a logical order is reversed in the extracted text and an indication of the number of occurrences of LtR logical order and RtL logical order.

Preferably, the result is stored.

The process of figure 4 ends.

If the logical order of at least a sub-set of the extracted text is reversed in the extracted text, the order identifier (110) passes the result to the reverse component (115) and step 210 of figure 2 is executed.

If the logical order of at least a sub-set of the extracted text is not reversed in the extracted text, the process of figure 2 ends.

Preferably, look-up of one or more dictionaries is used after one or more of the previous mechanisms, because increased processing and time is required for look-ups.

Preferably, look-up of one or more dictionaries is used in accordance with the confidence values associated with the previous mechanisms.

It should be understood that any number of other mechanisms can be executed in order to determine a result indicating whether there is text having an LtR logical order, having an RtL logical order, whether a logical order is reversed in the extracted text and an indication of the number of occurrences of LtR logical order and RtL logical order.

It should be understood that such a mechanism is preferably selected in accordance with the result(s) obtained following step 200 (i.e. a result indicating at least one determined language). Thus, advantageously, a mechanism associated with characteristics of a particular language can be selected.

In one example, grammatical analysis can be used.

With reference to figure 2, if the logical order is reversed in the extracted text, step 210 of figure 2 is executed, whereby the reverse component (115) reverses one or more text portions associated with the extracted text.

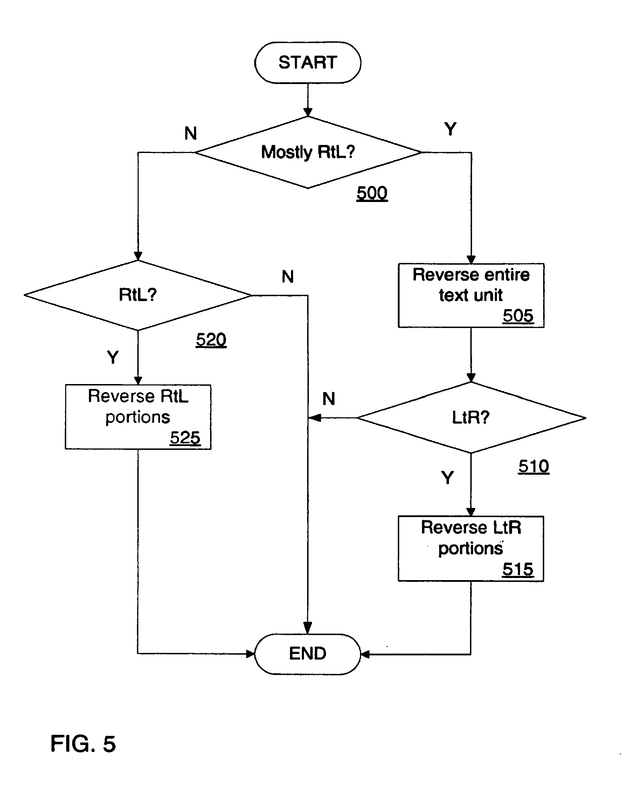

Step 210 comprises a number of steps depicted in figure 5.

The reverse component (115) uses a result received from the order identifier (110).

In the example herein, the reverse component (115) uses one or more results indicating whether there is text having an LtR logical order, text having an RtL logical order, whether a logical order is reversed in the extracted text and an indication of the number of occurrences of text having an LtR logical order and text having an RtL logical order.

At step 500, the reverse component (115) uses the one or more results to determine whether the logical ordering is predominantly RtL (e.g. by using an indication that there is text having an RtL logical order and an indication of the number of occurrences of text having an LtR logical order and text having an RtL logical order).

In the first example, the reverse component (115) determines that there is text having an RtL logical order, that there is one occurrence of text having an LtR logical order (e.g. the first punctuation character) and two occurrences of text having an RtL logical order (e.g. the second punctuation character and the commonly occurring word "eht").

In the first example, the reverse component (115) determines that the logical ordering is predominantly RtL and preferably, reverses (step 505) one or more text portions of the extracted text.

Preferably, the reverse component (115) uses location data associated with the extracted text to determine a text portion. For example, if the location data specifies that lines are in a correct logical order, the reverse component (115) determines that the text portion is a line and in response, reverses one line at a time. Thus, in response to the reversal, the text will read correctly from top to bottom.

It should be understood that a determination of any number of other text portions can occur (e.g. paragraphs).

In the first example, the result of reversal is shown below:

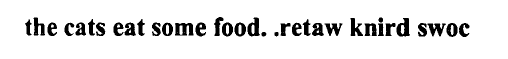

At step 510, the reverse component (115) uses the one or more results to determine whether there is any text having an LtR logical order.

If the reverse component (115) determines that there is not any text having an LtR logical order, the process of figure 5 ends (and the process of figure 2 ends). The processed text can be sent to one or more tools e.g. for analysis.

If the reverse component (115) determines that there is text having an LtR logical order, the reverse component (115) determines one or more text portions having an LtR logical order.

Typically, a character has, as well as a character encoding, a property associated with direction (that is, a logical order). Typically, a space character has a property of "neutral" indicating that it does not have an RtL logical order or an LtR logical order.

Preferably, the reverse component (115) processes the extracted text and looks up the property of each character in order to determine an associated logical order.

In the first example, characters of the extracted text and associated properties are shown below, where "r" indicates an RtL logical order; "l" indicates an LtR logical order and "n" indicates neutral:

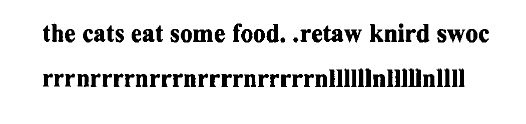

In the first example, the reverse component (115) determines that there are three text portions having an LtR logical order.

In response, the reverse component (115) reverses (step 515) the text portions having an LtR logical order. Preferably, an entire portion comprising the three text portions is reversed (including characters having a neutral property within the three text portions). However, a character having a neutral property at a boundary (e.g. beginning or end) of the entire portion is not reversed. For example, the space character indicated with an underline below, is not reversed:

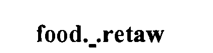

In the first example, the result of reversal is shown below:

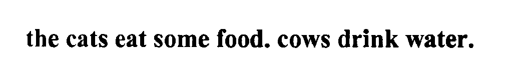

The process of figure 5 ends (and the process of figure 2 ends). The processed text can be sent to one or more tools e.g. for analysis.

Advantageously, if text having an RtL logical order is predominant in the extracted text, executing a bulk reversal of the text at step 505 corrects the reversal of the majority of text in a single execution. By correcting the reversal of some (i.e. a minority of) text portions having an LtR logical order after this bulk reversal, efficiency is improved.

If the reverse component (115) determines that the logical ordering is not predominantly RtL, preferably, at step 520, the reverse component (115) uses the one or more results to determine whether there is any text having an RtL logical order.

If the reverse component (115) determines that there is not any text having an RtL logical order, the process of figure 5 ends (and the process of figure 2 ends). The processed text can be sent to one or more tools e.g. for analysis.

If the reverse component (115) determines that there is text having an RtL logical order, the reverse component (115) determines one or more text portions having an RtL logical order (e.g. by analysing a property associated with direction of a character).

In response, the reverse component (115) reverses (step 515) the text portions having an RtL logical order.

The process of figure 5 ends (and the process of figure 2 ends). The processed text can be sent to one or more tools e.g. for analysis.

Advantageously, if text having an RtL logical order is not predominant in the extracted text, a reversal of some (i.e. a minority of) text portions having an RtL logical order is executed, thus improving efficiency.

It should be understood that if the extracted text is processed in an RtL order, one or more modifications are made.

For example, a second set of rules is used as a logical order specified in the set of rules described above will be incorrect. For example, if the following types of characters are determined, an associated logical order is LtR rather than RtL:

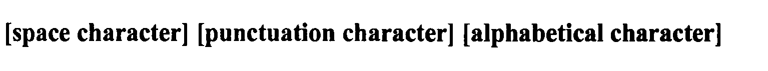

Further modifications can be made e.g. wherein a word is stored in a dictionary in an RtL logical order and reversed logical order.

Advantageously, the present invention receives an input document comprising text having an associated first order and processes text having a second logical order so that the text can be efficiently analysed.

Advantageously by using a plurality of mechanisms associated with heuristics and by using a confidence threshold, the robustness of results generated by the apparatus of the present invention can be improved.

Advantageously, the present invention can be used with any number of display documents. For example, a PDF file which stores text in LtR order for display can be used. In another example, a file which comprises a document that has been scanned and processed using optical character recognition (OCR) can be used. In another example, a file comprising markup (e.g. HTML) wherein the logical order of text is incorrectly specified or not specified can be used.

Advantageously, the present invention can be used in a number of applications. For example, in preparation of text for text analysis; in preparation of text for use by text processing systems e.g. a word processing system and in preparation of text for storage in text retrieval systems e.g. a database or a content management system.

Advantageously, the present invention is operable to handle a document comprising bidirectional text (that is, text having an RtL logical order and text having an LtR logical order).

It will be clear to one of ordinary skill in the art that all or part of the method of the preferred embodiments of the present invention may suitably and usefully be embodied in a logic apparatus, or a plurality of logic apparatus, comprising logic elements arranged to perform the steps of the method and that such logic elements may comprise hardware components, firmware components or a combination thereof.

It will be equally clear to one of skill in the art that all or part of a logic arrangement according to the preferred embodiments of the present invention may suitably be embodied in a logic apparatus comprising logic elements to perform the steps of the method, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

It will be appreciated that the method and arrangement described above may also suitably be carried out fully or partially in software running on one or more processors (not shown in the figures), and that the software may be provided in the form of one or more computer program elements carried on any suitable data-carrier (also not shown in the figures) such as a magnetic or optical disk or the like. Channels for the transmission of data may likewise comprise storage media of all descriptions as well as signal-carrying media, such as wired or wireless signal-carrying media.

The present invention may further suitably be embodied as a computer program product for use with a computer system. Such an implementation may comprise a series of computer-readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

In an alternative, the preferred embodiment of the present invention may be realized in the form of computer implemented method of deploying a service comprising steps of deploying computer program code operable to, when deployed into a computer infrastructure and executed thereon, cause said computer system to perform all the steps of the described method.

It will be clear to one skilled in the art that many improvements and modifications can be made to the foregoing exemplary embodiment without departing from the scope of the present invention.

## Claims

1. An apparatus (100) for preparing a display document (130) for analysis comprising:
an extractor (102) for extracting character data from the display document (130);
an order identifier (110) for determining a first order associated with processing of the character data;
a language identifier (105) for identifying (200) at least one language associated with the character data in the document (130);
wherein the order identifier (110) is operable to identify a second order associated with a logical order of the character data;
wherein at least one of: the language identifier (105) and the order identifier (110) is operable to generate a confidence value associated with at least one of: the identified language and the determined second order respectively;
wherein the apparatus (100) comprises means for comparing the confidence value against a confidence threshold;
wherein the order identifier (110) is operable to use the identified language for determining a rule against which to compare the character data in the document in order to determine the second order;
wherein the order identifier (110) is operable to determine whether the first order is different from the second order; and
a reverse component (115), responsive to the order identifier determining that the first order is different from the second order, for reversing the character data.

2. An apparatus (100) as claimed in claim 1, wherein the order identifier (110) is operable to:
determine position dependent character data;
compare the position dependent character data against a position dependent character rule; and
in response to the comparison, determine the second order.

3. An apparatus (100) as claimed in claim 2, wherein the position dependent character data comprises at least one of: a punctuation character and presentation data.

4. An apparatus (100) as claimed in claim 1, wherein the order identifier (110) is operable to:
determine a commonly-occurring word in the character data;
compare the commonly-occurring word against a commonly-occurring word rule; and
in response to the comparison, determine the second order.

5. An apparatus (100) as claimed in claim 1, wherein the order identifier (110) is operable to:
compare the character data against a set of dictionaries; and
in response to the comparison, determine the second order.

6. An apparatus (100) as claimed in claim 1, wherein the language identifier (105) is operable to analyse at least one of: vocabulary associated with the character data; at least one character encoding associated with the character data and script data associated with a script of the character data.

7. An apparatus (100) as claimed in claim 1, wherein the reverse component is operable to determine whether the character data in the document (130) has a predominant first order.

8. An apparatus (100) as claimed in claim 7, wherein, in response to determining that the character data in the document (130) has a predominant first order, the reverse component is operable to:
determine at least one subset of the data associated with the second order; and
reverse the determined subset.

9. An apparatus (100) as claimed in claim 7, wherein, in response to determining that the character data in the document (130) does not have a predominant first order, the reverse component (115) is operable to:
reverse the character data; in response to reversing the character data/determine at least one subset of the character data associated with the first order; and
reverse the determined subset.

10. A computer implemented method for preparing a display document (130) for analysis comprising the steps of:
extracting (102) character data from the display document;
determining (110) a first order associated with processing of the character data;
identifying (105, 200) at least one language associated with the character data in the document;
identifying (110) a second order associated with a logical order of the character data;
generating a confidence value associated with at least one of: the identified language and the determined second order respectively;
comparing the confidence value against a confidence threshold;
using (110) the identified language for determining a rule against which to compare the character data in the document in order to determine the second order;
using (110) the comparison to determine whether the first order is different from the second order; and
reversing (115), in response to the determination that the first order is different from the second order, the character data.

11. A computer program comprising program code means adapted to perform all the steps of claim 10 when said program is run on a computer.

## Patentansprüche

1. Vorrichtung (100) zum Vorbereiten eines Anzeigedokuments (130) für Analysen, wobei die Vorrichtung umfasst:
einen Extraktor (102) zum Entnehmen von Zeichendaten aus dem Anzeigedokument (130);
ein Reihenfolgen-Bezeichner (110) zum Festlegen einer ersten Reihenfolge, die der Verarbeitung der Zeichendaten zugehörig ist;
einen Sprach-Identifizierer (105) zum Identifizieren (200) mindestens einer Sprache, die den Zeichendaten in dem Dokument (130) zugehörig ist;
wobei der Reihenfolgen-Bezeichner (110) funktionsmäßig zum Festlegen einer zweiten Reihenfolge in der Lage ist, die einer logischen Reihenfolge der Zeichendaten zugehörig ist;
wobei der Sprach-Identifizierer (105) und/oder der Reihenfolgen-Bezeichner (110) zum Erzeugen eines Vertrauenswerts ausführbar sind, der wenigstens der identifizierten Sprache oder der festgelegten zweiten Reihenfolge zugehörig ist;
wobei die Vorrichtung (100) ein Mittel zum Vergleichen des Vertrauenswerts mit einem Vertrauens-Schwellenwert umfasst;
wobei der Reihenfolgen-Bezeichner (110) funktionsmäßig in der Lage ist, die identifizierte Sprache zu verwenden, um eine Vorschrift festzulegen, mit der die Zeichendaten in dem Dokument verglichen werden, um die zweite Reihenfolge festzulegen;
wobei der Reihenfolgen-Bezeichner (110) funktionsmäßig in der Lage ist zu ermitteln, ob die erste Reihenfolge von der zweiten Reihenfolge abweicht; und
in Reaktion darauf, dass der Reihenfolgen-Bezeichner ermittelt, dass die erste Reihenfolge von der zweiten Reihenfolge abweicht, eine Umkehrkomponente (115) zum Umkehren der Zeichendaten.

2. Vorrichtung (100) nach Anspruch 1, wobei der Reihenfolgen-Bezeichner (110) funktionsmäßig in der Lage ist:
positionsabhängige Zeichendaten zu ermitteln;
positionsabhängige Zeichendaten mit einer positionsabhängigen Zeichenvorschrift zu vergleichen; und
in Reaktion auf den Vergleich die zweite Reihenfolge festzulegen.

3. Vorrichtung (100) nach Anspruch 2, wobei die positionsabhängigen Zeichendaten umfassen: ein Interpunktionszeichen und/oder Darstellungsdaten.

4. Vorrichtung (100) nach Anspruch 1, wobei der Reihenfolgen-Bezeichner (110) funktionsmäßig in der Lage ist:
ein üblicherweise vorkommendes Wort in den Zeichendaten zu ermitteln;
das üblicherweise vorkommende Wort mit der Vorschrift für üblicherweise vorkommende Wörter zu vergleichen; und
in Reaktion auf den Vergleich die zweite Reihenfolge festzulegen.

5. Vorrichtung (100) nach Anspruch 1, wobei der Reihenfolgen-Bezeichner (110) funktionsmäßig in der Lage ist:
die Zeichendaten mit einem Satz von Wörterbüchern zu vergleichen; und
in Reaktion auf den Vergleich die zweite Reihenfolge festzulegen.

6. Vorrichtung (100) nach Anspruch 1, wobei der Sprachbezeichner (105) funktionsmäßig zur Analyse in der Lage ist von: den Zeichendaten zugehörigen Vokabeln; und/oder mindestens einer Zeichenverschlüsselung, die den Zeichendaten zugehörig ist, und/oder Skriptdaten, die einem Skript der Zeichendaten zugehörig sind.

7. Vorrichtung (100) nach Anspruch 1, wobei die Umkehrkomponente funktionsmäßig in der Lage ist zu ermitteln, ob die Zeichendaten in dem Dokument (130) überwiegend eine erste Reihenfolge aufweisen.

8. Vorrichtung (100) nach Anspruch 7, wobei in Reaktion auf das Ermitteln, dass die Zeichendaten in dem Dokument (130) überwiegend eine erste Reihenfolge aufweisen, die Umkehrkomponente funktionsmäßig in der Lage ist:
mindestens eine Teilmenge der Daten, die der zweiten Reihenfolge zugehörig sind, festzulegen; und die festgelegte Teilmenge umzukehren.

9. Vorrichtung (100) nach Anspruch 7, wobei in Reaktion auf das Ermitteln, dass die Zeichendaten in dem Dokument (130) überwiegend keine erste Reihenfolge aufweisen, die Umkehrkomponente (115) funktionsmäßig in der Lage ist:
die Zeichendaten umzukehren; in Reaktion auf das Umkehren der Zeichendaten mindestens eine Teilmenge der Zeichendaten zu ermitteln, die der ersten Reihenfolge zugehörig ist; und die festgelegte Teilmenge umzukehren.

10. Auf einem Computer realisiertes Verfahren zum Vorbereiten eines Anzeigedokuments (130) für Analysen, wobei das Verfahren die Schritte umfasst:
Entnehmen (102) von Zeichendaten aus dem Anzeigedokument;
Ermitteln (110) einer ersten Reihenfolge, die der Verarbeitung der Zeichendaten zugehörig ist;
Identifizieren (105, 200) mindestens einer Sprache, die den Zeichendaten in dem Dokument zugehörig ist;
Identifizieren (110) einer zweiten Reihenfolge, die einer logischen Reihenfolge der Zeichendaten zugehörig ist;
Erzeugen eines Vertrauenswerts, der zugehörig ist: der identifizierten Sprache und/oder der festgelegten zweiten Reihenfolge;
Vergleichen des Vertrauenswerts mit einem Vertrauens-Schwellenwert;
Verwenden (110) der identifizierten Sprache zum Ermitteln einer Vorschrift, womit die Zeichendaten in dem Dokument verglichen werden, um die zweite Reihenfolge festzulegen;
Verwenden (110) des Vergleichs zum Ermitteln, ob die erste Reihenfolge von der zweiten Reihenfolge abweicht; und
in Reaktion auf das Ermitteln, dass die erste Reihenfolge von der zweiten Reihenfolge abweicht, Umkehren (115) der Zeichendaten.

11. Computerprogramm, das Programmcode-Mittel umfasst, die zum Ausführen aller Schritte nach Anspruch 10 geeignet sind, wenn das Programm auf einem Computer ausgeführt wird.

## Revendications

1. Dispositif (100) pour la préparation d'un document d'affichage (130) destiné à l'analyse, le dispositif comprenant :
un extracteur (102) pour extraire des données de caractère à partir du document d'affichage (130) ;
un identificateur d'ordre (110) pour déterminer un premier ordre associé au traitement des données de caractère ;
un identificateur de langage (105) pour identifier (200) au moins un langage associé aux données de caractère dans le document (130) ;
dans lequel l'identificateur d'ordre (110) est en mesure d'identifier un second ordre associé à un ordre logique des données de caractère ;
dans lequel au moins l'identificateur de langage (105) et l'identificateur d'ordre (110) sont en mesure de générer une valeur de confiance associée à : le langage identifié set/ou le second ordre déterminé respectivement ;
dans lequel le dispositif (100) comprend un moyen pour comparer la valeur de confiance à un seuil de confiance ;
dans lequel l'identificateur d'ordre (110) est en mesure d'utiliser le langage identifié pour déterminer une règle afin de comparer les données de caractère dans le document en vue de déterminer le second ordre ;
dans lequel l'identificateur d'ordre (110) est en mesure de déterminer si le premier ordre est différent du second ordre ; et
un composant d'inversion (115) en réponse à l'identificateur d'ordre déterminant que le premier ordre est différent du second ordre pour inverser les données de caractère.

2. Dispositif (100) selon la revendication 1, dans lequel l'identificateur d'ordre (110) est en mesure de :
déterminer des données de caractère dépendant de la position ;
comparer les données de caractère dépendant de la position à une règle de caractère dépendant de la position ; et
en réponse à la comparaison, déterminer le second ordre.

3. Dispositif (100) selon la revendication 2, dans lequel les données de caractère dépendant de la position comprennent au moins un caractère de ponctuation et des données de présentation.

4. Dispositif (100) selon la revendication 1, dans lequel l'identificateur d'ordre (110) est en mesure de :
déterminer un mot survenant couramment à une règle de mots survenant couramment ; en réponse à la comparaison,
déterminer le second ordre.

5. Dispositif (100) selon la revendication 1, dans lequel l'identificateur de langage (105) est en mesure de :
comparer les données de caractère à un jeu de dictionnaires ; et en réponse à la comparaison, de déterminer le second ordre.

6. Dispositif (100) selon la revendication 1, dans lequel l'identificateur d'ordre (110) est en mesure d'analyser :
des vocabulaires associés aux données de caractère ; et/ou au moins un codage de caractère associé aux données de caractère et/ou les données de script associées à un script des données de caractère.

7. Dispositif (100) selon la revendication 1, dans lequel les données de caractère dans le document (130) ont un premier ordre prédominant.

8. Dispositif (100) selon la revendication 7, dans lequel en réponse à la détermination que les données de caractère dans le document (130) présentent un premier ordre prédominant, le composant d'inversion est en mesure de :
déterminer au moins un sous-ensemble des données associées au second ordre ; et inverser le sous-ensemble déterminé.

9. Dispositif (100) selon la revendication 7, dans lequel en réponse à la détermination que les données de caractère dans le document (130) ne doivent pas avoir un premier ordre prédominant, le composant d'inversion (115) est en mesure de :
inverser les données de caractère ; en réponse à l'inversion des données de caractère
déterminer au moins un sous-ensemble des données de caractère associées au premier ordre ; et
inverser le sous-ensemble déterminé.

10. Procédé exécuté dans un ordinateur pour la préparation d'un document d'affichage (130) pour l'analyse, le procédé comprenant les étapes :
d'extraction (102) des données de caractère à partir du document affiché ;
de détermination (110) d'un premier ordre associé au traitement des données de caractère ;
d'identification (105, 200) d'au moins un langage associé aux données de caractère dans le document ;
d'identification (110) d'un second ordre associé à un ordre logique des données de caractère ;
de génération d'une valeur de confiance associée à : le langage identifié et/ou la seconde instruction prédéterminé respectivement ;
de comparaison de la valeur de confiance à au moins un seuil de confiance ;
d'utilisation (110) du langage identifié pour la détermination d'une règle afin de comparer les données de caractère dans le document en vue de déterminer le second ordre ;
d'utilisation (110) de la comparaison pour déterminer si le premier ordre est différent du second ordre ; et
d'inversion (115) des données de caractère en réponse à la détermination que le premier ordre est différent du second ordre.

11. Programme informatique comprenant des moyens de code de programme, adaptés à exécuter toutes les étapes selon la revendication 10, lorsque ledit programme est exécuté sur un ordinateur.
